Europäisches Patentamt

European Patent Office

Office européen des brevets

(11) Publication number: **0 162 484**
**B1**

(12) **EUROPEAN PATENT SPECIFICATION**

(45) Date of publication of patent specification: **08.08.90**

(51) Int. Cl.⁵: **F 16 C 19/12**

(21) Application number: **85200326.8**

(22) Date of filing: **06.03.85**

(54) **Ball support assembly.**

(30) Priority: **25.05.84 US 614277**

(43) Date of publication of application:
**27.11.85 Bulletin 85/48**

(45) Publication of the grant of the patent:
**08.08.90 Bulletin 90/32**

(84) Designated Contracting States:
**DE FR GB IT NL**

(56) References cited:
**DE-A-2 039 660**
**FR-A-1 316 025**
**GB-A-1 266 501**
**US-A-3 466 697**

(73) Proprietor: **THE BOEING COMPANY**
**Younker Building (2nd Floor) 3900 E. Valley
Highway
Renton Washington 98055 (US)**

(72) Inventor: **Gorges, Frederick J.
P.O. Box 78502
Seattle, Washington 98178 (US)**

(74) Representative: **Hoijtink, Reinoud et al
OCTROOIBUREAU ARNOLD & SIEDSMA
Sweelinckplein 1
NL-2517 GK Den Haag (NL)**

Courier Press, Leamington Spa, England.

## Description

The invention relutes to a ball support assembly adapted for use as part of a cargo handling system as defined in the introductory part of claim 1.

Such a ball support assembly is known from GB—A—1 266 501, and especially Fig. 6 and the corresponding description thereof. In this known assembly the mounting member comprises of two main parts, connected to one another by means of screwthread. The ball member is enclosed between said two main parts. The means retaining the mounting member is said chamber are formed by step means limiting upward movement of the mounting member relative to the base member. The mounting member containing the ball member is mounted in the main base member from the underside thereof and is locked into the base member by means of a further screwthreaded part, engaging in a lower portion of the main base member.

It is an object of the present invention to provide a ball support assembly of the kind set forth above, which has an improved simplicity and effectiveness of design, without impairing the proper functioning of the assembly.

This object is achieved with the characterizing measures of claim 1. For assembling the device, the ball member first can simply be pushed into the mounting member, and after arranging the mounting member in the main base member, the ball member is confined in the assembly. No relatively expensive screwthreaded parts, which also take relatively much time in assembling, are needed.

A preferred embodiment is characterized in claim 2.

With the further development of the invention as characterized in claim 3, the ease of assembling is further improved.

With the measure of claim 4 the mounting member containing the ball can very effectively be mounted in the base member, simply by pushing it into the chamber thereof. As soon as the locking means of the leg members engage, all parts of the assembly are fixed in the proper position and more particularly the ball member is at the same time confined in the recess of the mounting member.

Other features will become apparent from the following detailed description.

Brief description of the drawings

Figure 1 is an isometric view of a ball support member of the present invention positioned at the floor of a cargo handling area, with the floor being shown in section;

Figure 2 is a sectional view taken along line 2—2 of Figure 1, so as to show the ball support unit in vertical section; and

Figure 3 is an exploded view showing the components of the ball support assembly in their disassembled position.

Description of the preferred embodiment

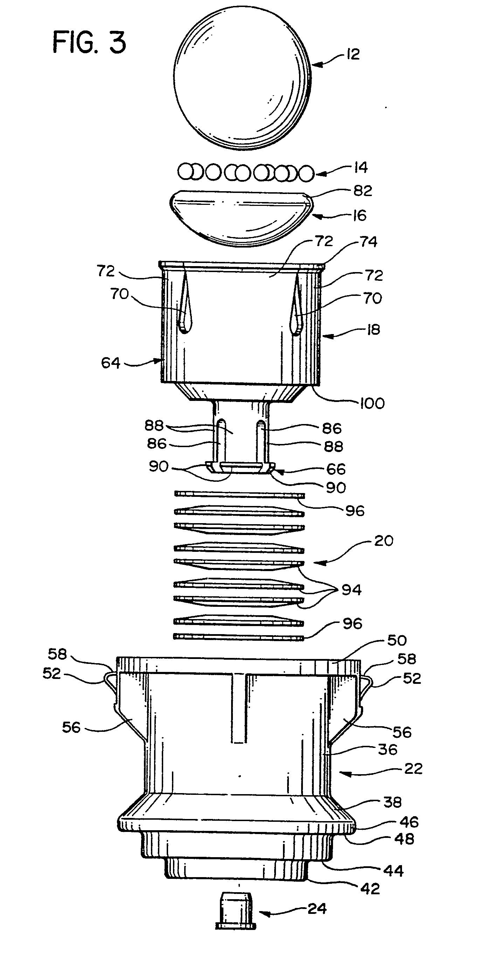

With reference to Figure 3, the seven main components of the ball support assembly 10 are the following: a main ball member 12, a plurality of smaller ball bearings 14, a bearing plate 16, a mounting member 18, a spring assembly 20, a main base member 22, and a locking member 24.

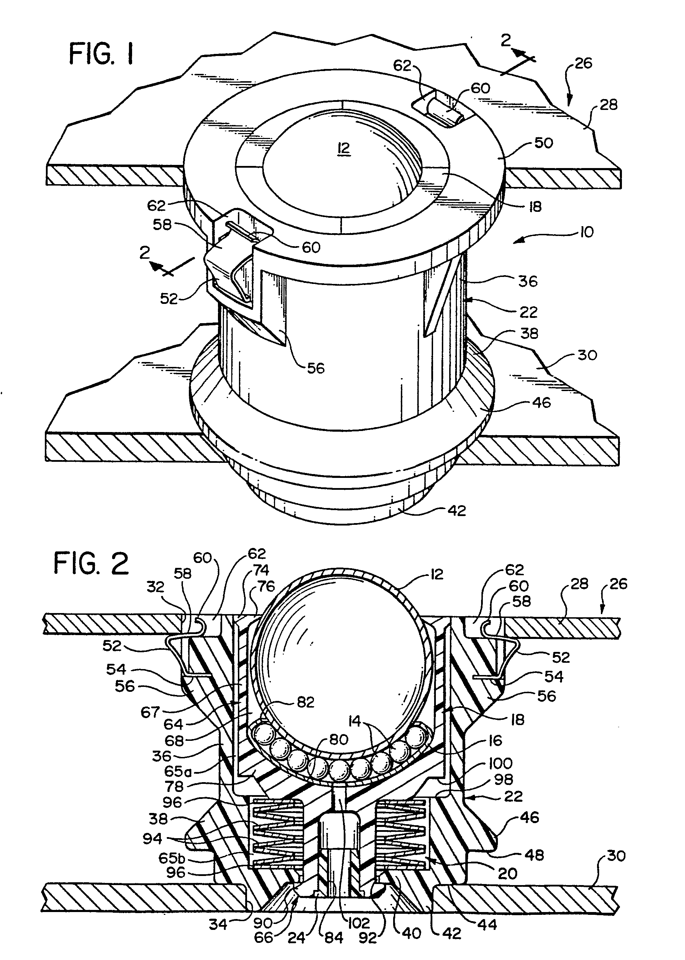

These components 12—24 are shown in Figures 1 and 2 in their assembled position to form the ball support assembly 10 that is in turn mounted in the floor 26 of the cargo handling area. This floor 26 comprises upper and lower panels 28 and 30, respectively. These panels 28 and 30 can be interconnected by conventional means, such as an intermediate core of honeycomb, or possibly horizontally extending connecting ribs. While only one ball assembly 10 is shown herein, it is to be understood that in a cargo handling system, a plurality of these ball assemblies would be positioned throughout the floor area over which cargo is to be moved. At each ball assembly location, the upper and lower panels are formed with aligned circular openings 32 and 34, respectively.

The base member 22 has a generally cylindrical configuration, and has an upper side wall portion 36, a lower side wall portion 38, and a bottom wall 40. The bottom wall 40 is formed with a downwardly extending circular lip 42 which fits into the lower panel opening 34 so as to properly position the base member 22, with the peripheral portion 44 of the bottom wall 40 bearing downwardly against the portion of the lowest panel 30 that surrounds the opening 34. In some instances, the lower panel 30 may be formed with moderately large openings 34, and for this reason the base member 22 is also provided with an annular support flange 46 that extends outwardly from the lower side wall portion 38 so as to form a downwardly facing shoulder 48. Thus, where the lower panel 30 is formed with the larger openings, the flange 46 provides the vertical support for the base member 22.

The upper end of the base member 22 has an outwardly extending flange 50 that fits closely within the upper opening 32 so as to form with the upper surface of the upper panel 28 a substantially continuous horizontal surface. The upper portion of the base member 22 is also provided with a pair of spring-like retaining elements 52 positioned on opposite sides of the member 22. Ech element 52 comprises a lower mounting finger 54 that fits within a laterally extending slot formed in a protrusion 56 that is provided for each retaining element 52. The retaining element 52 extends upwardly from the finger 54 and is then formed with an inwardly extending shoulder portion 58 that ends in an upwardly and outwardly curved hook-like portion 60. The upper portion of the base member 22 is formed with shallow recesses or slots 62 to receive the hook-like portion 60 and shoulder portion 58 of its respective retaining element 52. In the installed position, the shoulder portion 58 extends beneath the edge portion of the upper panel 28 that surrounds the upper opening 32, thus preventing the ball assembly 10 from being moved upwardly from the floor 26. However, by gripping the two hook-like portions 60 and pressing them inwardly, the shoulder portions 58 of the retaining elements 52 are moved to a position within the periphery of the upper hole 32, so that the entire assembly 10 can be lifted out of the floor 26.

The aforementioned mounting member 18 is mounted within the base member 22 in a manner that the mounting member 18 has limited up and down movement. In terms of function, the mounting member 18 can be considered as having an upper ball retaining portion 64 fitting in an upper chamber portion 65a defined by the upper wall portion 36, and a lower connecting portion 66 which extends downwardly through a lower chamber portion 65b defined by the lower side wall portion 38, and by which the mounting member is secured to the base member 22.

The upper ball retaining portion 64 comprises a generally cylindrical side wall 67, that defines a ball receiving recess 68. The upper half of the wall 67 is formed with a plurality of evenly spaced vertical slots 70 that separate the upper portion of the side wall 67 into four expandable sections 72. The upper edge of the side wall 67 is formed with a circumferential flange 74 that has an inwardly extending circumferential lip 76 to retain the ball 12 in the recess 68. The outer edge of the flange 74 fits against the upper inner surface of the base member 22.

The ball retaining portion 64 also has a bottom wall 78 that has a circularly curved upwardly facing surface 80 to support the aforementioned bearing plate 16. The bearing plate 16 is curved to match the curvature of the upper surface 80 so that the entire lower surface of the bearing plate 16 bears against the upper surface 80. Although in the embodiment described herein the bearing plate 16 bears loosely against the upper surface 80, as an alternative the two parts can be spin-welded at the interface. The bearing plate 16 is formed with a peripheral in-turned lip 82 so that the ball bearings 14 can be retained within the perimeter of the plate 16.

The connecting portion 66 is axially aligned with, and centered relative to, the ball retaining portion 64 and extends downwardly therefrom. This connecting portion 66 is cylindrically shaped, having a diameter substantially smaller than the ball retaining portion 64. Further, the connecting portion 66 has a lower cylindrical recess or socket 84, and its lower portion is formed with a plurality of downwardly extending open slots 86 so as to form the lower part of the connecting portion 66 into moderately flexible leg members 88.

The lower portion of each leg member 88 is formed with an outwardly extending retaining or locking foot 90. In the installed position of Figures 1 and 2, the connecting portion 66 extends downwardly through an opening 92 formed in the bottom wall 40 of the base member 22, with the four locking feet 90 reaching outwardly to grip the lower edge portion of the bottom wall 40 that surrounds the opening 92. The locking plug 24 is pushed upwardly into the socket 84, with the plug 24 being sized relative to the socket 84 so as to fit in a snug friction fit within the socket 84 and push the leg members 88 outwardly into locking engagement with the bottom wall 40.

The spring assembly 20 comprises a plurality of spring-like washers 94, each of which has a shallow frusto-conical configuration, with a center through opening to accommodate the connecting portion 66 of the mounting member 18. The top and bottom washers 96 can be made as flat washers to provide a proper bearing surface to press against the bottom wall 78 of the mounting member 18 and the bottom wall 40 of the base member 22, respectively. By increasing or decreasing the number of washers 94, the force exerted by the spring assembly 20 can be changed.

To limit the downward movement of the mounting member 18, the lower side wall portion 38 of the base member 22 is formed with a diameter moderately smaller than that of the upper side wall portion 36, so as to form an upwardly facing peripheral shoulder or annular surface 98. The lower edge of the side wall 67 of the mounting member 18 is formed with a downwardly facing peripheral shoulder or annular surface 100. When the ball 12 is pushed downwardly with sufficient force to compress the spring assembly 20, the mounting member 18 will "bottom out" when the shoulders or surfaces 98 and 100 come into contact with one another.

The bearing plate 16 and the mounting member 18 are each formed with aligned through openings (both of which are designated 102) which lead into the socket 84. These openings 102 provide for drainage of any water or other liquid which might pass into the recess 68 defined by the ball retaining portion 64.

One of the significant features of the present invention is the manner in which the components 12—24 can be assembled and disassembled (possibly for repair or adjustment), and also the manner in which the assembly 10 can be placed in its operating position in the floor 26 and removed therefrom.

With regard to the manner of assembling the components 12—24, attention is first directed to Figure 3. The bearing plate 16, with the ball bearings 14 being placed thereon, is inserted into the recess 68 of the mounting member 18. Then the main support ball 12 is pushed downwardly into the recess 68. The ball 12 is sized so that as it is moved downwardly into the recess 68, it spreads the expandable sections 78 of the ball retaining portion 64. After the widest portion of the ball 12 passes by the upper inwardly extending lip 76 of the expandable section 72, these sections 72 spring back into place so that the lip 76 extend to a location closely adjacent to the ball 12, moderately above the midsection of the ball 12.

With the ball 12, bearings 14 and plate 16 positioned within the recess 68 of the mounting member 18, the spring assembly 20 is moved upwardly over the lower connecting portion 66 of the mounting member 18. Then, these assembled components 12—20 are moved downwardly into the base member 22 so that the upper ball retaining portion 64 of the member 18 fits in the upper chamber portion 65a, and the connecting portion 64 extends into the lower chamber portion 65b. The legs 88 of the connecting portions 66 can be squeezed or bent inwardly by a suitable tool so that the locking feet 90 can pass through the bottom opening 92. Then the legs 88 are released so that the legs 88 spring outwardly, with the feet 90 locked beneath the lower surface of the bottom wall 40 at the location of the opening 92. Then, the plug member 24 is pushed upwardly into the socket 84 so as to be firmly wedged therein. This keeps the legs 88 pushed outwardly in the opening 92 so that the feet 90 are securely locked under the bottom wall 40 of the base member 22.

With the components 10—24 so assembled, the spring assembly 20 pushes from the bottom wall 40 against the bottom surface of the bottom wall 78 of the mounting member 18. However, the upward force of the spring is resisted by the feet 90 engaging the bottom wall 40 of the base member 22.

The assembly 10 is placed in the floor by gripping the two hook-like portions 60 of the retaining elements 54 and squeezing them inwardly. Then the assembly 10 is lowered through the floor panel 28 so that the outer edge of the bottom wall 40 rests against the bottom floor panel 30. As indicated previously, if the two panels 28 and 30 are positioned closer to one another, the bottom hole or opening 34 can be made moderately larger, with the flange 46 resting against the lower panel 30. When the assembly 10 is in place, as shown in Figures 1 and 2, the two hook-like members 60 are released, and the retaining elements 52 spring outwardly, so that the shoulder portions 58 thereof hold the assembly 10 in the position of Figures 1 and 2.

As indicated previously, in operation there are a number of ball assemblies 10 positioned at spaced locations along the floor 26. When a crate or other cargo item passes over the ball support assembly 10 so as to come into contact with the ball 12, the ball 12 can rotate freely to provide very low friction contact with the cargo item. If there is high localized loading on one of the ball assemblies 10, the force on the ball 12 may be sufficient to overcome the upward force exerted by the spring assembly 20. In that case, the spring assembly 20 becomes depressed, so that the spring assembly 20 provides an increased upward force. If the load force is sufficiently great to totally overcome the upward force exerted by the spring assembly 20, then the mounting member 18 will "bottom out" by the surface 100 contacting the surface 98. During the downward movement of the mounting member 18, the connecting portion 66 slides downwardly in the bottom opening 92 of the bottom wall 40 of the base member 22.

With regard to the manner in which the loads are transmitted through the assembly 12, in those situations where the ball 12 is in the position of Figure 2 or partially depressed to some intermediate position, then the entire vertical loading is taken through the spring assembly 20 and transmitted into the bottom wall 40 of the base member 22, and thence into the lower floor panel 30. When the ball 12 and the mounting member 18 "bottom out" so that the surfaces 100 and 98 come into contact, then the additional load is exerted as a direct compression load through the lower side wall portion 38 directly in a downward direction to the edge portion of the bottom panel 30 that defines the lower openings 34.

To remove the assembly 10 from the floor 26, the two hook-like portions 60 are squeezed inwardly (desirably by a suitable tool), and the assembly 10 is lifted from the floor 26. The assembly 10 can then be disassembled by removing the locking plug 24 from the socket 84 defined by the connecting portion 66. Then the legs 78 can be squeezed inwardly so that the locking feet 90 can pass upwardly through the opening 92 in the bottom wall 40. The mounting member 18, is then lifted out of the chambers 65a and 65b, and the ball member 12 can easily be removed by spreading the upper expandable sections 72 of the ball retaining portion 64.

From the above description, it is apparent that the two main components of this assembly 10 (i.e. the base member 22 and the mounting member 18) can be made of injection molded plastic parts. Further, the entire assembly 10 is held in its assembled position without the need of additional fasteners such as screws or bolts, and without bonding components one to another.

**Claims**

1. A ball support assembly (10) adapted for use as part of a cargo handling system, said assembly comprising:

a. a base member (22) having a lower portion and a peripheral side (36, 38) wall portion defining a chamber (65a, 65b);

b. a mounting member (18) movably mounted in said chamber for limited up and down movement, said mounting member (18) having an upper ball retaining portion (64) defining a ball retaining recess (68) and means (66) limiting upward movement of the mounting member (18) relative to the base member (22) so as to retain the mounting member (18) in said chamber;

c. a ball member (12) rotatably mounted in said recess (68) and positioned to provide a rotatable ball support surface;

d. said ball retaining portion near its upper edge having an inwardly extending lip (76) defining an opening with a smaller diameter than the diameter of said ball member (12), so as to retain said ball member (12) in said ball retaining recess (68);

e. said mounting member (18) and said base member (22) having cooperating stop means to limit downward movement of the mounting member (18) relative to the base member (22);

f. spring means (20) operatively engaging the base member (22) and the mounting member (18) to resiliently hold the mounting member (18) at an upper position in said chamber (65) and to yieldingly resist downward movement of the mounting member due to loads imposed on the ball support surface;

characterized in tha said ball retaining portion (64) comprises a radially expandable side wall (67), such that in an expanded position the opening defined by said inwardly extending lip (76) is of sufficient size to let the ball (12) pass into said recess (68) and in a retracted position the ball (12) is confined in the recess (68) by the lip (76), peripheral wall (36) of the base member (22) enclosing the side wall (67) of the ball retaining portion (64) in the assembled state of the ball support assembly (10), such that said wall (67) is held in said retracted position; and that said means for retaining the mounting member in said chamber comprises a lower connecting portion (66) extending downwardly from the ball retaining portion (64) and being operatively connected to the lower portion of the base member (22).

2. The assembly according to claim 1, characterized in that said expandable side wall (67) is formed with vertically extending slot means (70).

3. The assembly according to any of claims 1 or 2, characterized in that said connecting portion (66) is positioned to fit into a bottom opening (92) in the lower portion (40) of the base member (22) so as to be in locking engagement with the base member (22).

4. The assembly according to claim 3, characterized in that said connecting portion (66) comprises a plurality of downwardly extending leg members (88) having lower locking means (90), said assembly (10) further comprising a locking member (24) to hold the legs (88) outwardly in locking engagement in the bottom opening (92) of the lower portion (40) of the base member (22).

5. The assembly according to one of the preceding claims, characterized in that said spring means (20) comprises a plurality of frusto-conical spring members (94) positioned around said connecting portion (66) and pressing from a bottom wall (40) of said base member (22) upwardly against said mounting member (18).

6. The assembly according to one of the preceding claims, characterized in that said connecting portion (66) has a lower end portion in locking engagement with the lower portion of the base member (22), said spring means (20) is positioned around said connecting portion (66) so as to press from the lower portion (40) of the base member (22) upwadly against the mounting member (18), said mounting member (18) having a downwardly facing annular surface (100) positioned outwardly of said connecting portion (66), and said base member having a matching upwardly facing, generally annular surface (98) to come into contact with the downwardly facing surface (100) of the annular portion of the mounting member (18), with said two generally annular surface providing the cooperating stop means to limit downward movement of the mounting member (18).

**Patentansprüche**

1. Kugelhalteraufbau (10), der für die Verwendung als Teil eines Frachthandhabungssystems geeignet ist, welcher Aufbau folgendes umfaßt:

a. ein Basisteil (22), das einen unteren Teil und einen Umfangsseitenwandteil (36, 38) hat, die eine Kammer (65a, 65b) begrenzen;

b. ein Einbauteil (18), das zu einer beschränkten Aufwärts- und Abwärtsbewegung bewegbar in der Kammer angebracht ist, wobei das Einbauteil (18) einen oberen Kugelhalteteil (64), der eine Kugelhaltende Ausnehmung (68) begrenzt, und eine Einrichtung (66), welche die Aufwärtsbewegung des Einbauteils (18) relativ zu dem Basisteil (22) begrenzt, so daß es das Einbauteil (18) in der Kammer zurückhält;

c. ein Kugelteil (12), das drehbar in der Ausnehmung (68) angebracht zum Vorsehen einer drehbaren Kugelabstützungsoberfläche positioniert ist;

d. wobei der Kugelhalteil in der Nähe seines oberen Rands eine sich nach einwärts erstreckende Lippe (76) hat, die eine Öffnung mit einem kleineren Durchmesser, als es der Durchmesser des Kugelteils (12) ist, begrenzt, so daß sie das Kugelteil (12) in der kugelhaltenden Ausnehmung (68) zurückhält;

e. wobei das Einbauteil (18) und das Basisteil (22) zusammenwirkende Anschlagmittel zur Begrenzung der Abwärtsbewegung des Einbauteils (18) relativ zu dem Basisteil (22) haben;

f. eine Federeinrichtung (20), die in betriebsmäßigen Eingriff mit dem Basisteil (22) und dem Einbauteil (18) ist, so daß sie das Einbauteil (18) elastisch in einer oberen Position in der Kammer (65) hält und einer Abwärtsbewegung des Einbauteils aufgrund von Belastungen, die der Kugelabstützungsoberflächen aufgebürdet werden, nachgiebig widersteht;

dadurch gekennzeichnet, daß der Kugelhalteteil (64) eine radial erweiterbare Seitenwand (67) derart umfaßt, daß die Öffnung, die von der sich nach einwärts erstreckende Lippe (76) begrenzt wird, in einer erweiterten Position von genügender Größe ist, um die Kugel (12) in die Ausnehmung (68) durchgehen zu lassen, und in einer zurückgenommenen Position die Kugel (12) in der Ausnehmung (68) durch die Lippe (76) eingeschlossen wird, wobei die Umfangswand (36) des Basisteils (22) die Seitenwand (67) des Kugelhalteteils (64) in dem zusammengebauten Zustand des Kugelhalteraufbaus (10) derart umschließt, daß diese Wand (67) in der zurückgenommenen Position gehalten wird; und daß die Einrichtung zum Zurückhalten des Einbauteils in der Kammer einer unteren Verbindungsteil (66) umfaßt, der sich von dem Kugelhalteteil (64) nach abwärts erstreckt und betriebsmäßig mit dem unteren Teil des Basisteils (22) verbunden ist.

2. Aufbau nach Anspruch 1, dadurch gekennzeichnet, daß die erweiterbare Seitenwand (67) mit sich vertikal erstreckenden Schlitzmitteln (700 ausgebildet ist.

3. Aufbau nach irgendeinem der Ansprüche 1 oder 2, dadurch gekennzeichnet, daß der Verbindungsteil (66) so positioniert ist, daß er in eine Bodenöffnung (92) in dem unteren Teil (40) des Basisteils (22) so paßt, daß er in Verriegelungseingriff mit dem Basisteil (22) ist.

4. Aufbau nach Anspruch 3, dadurch gekennzeichnet, daß der verbindungsteil (66) eine Mehrzahl von sich nach abwärts erstreckenden Beinteilen (88) umfaßt, die eine untere Verriegelungseinrichtung (90) haben, wobei der Aufbau (10) weiter ein Verriegelungsteil (24) zum Auswärtshalten der Beine (88) in Verriegelungseingriff in der Bodenöffnung (92) des unteren Teils (40) des Basisteils (22) umfaßt.

5. Aufbau nach einem der vorhergehenden Ansprüche, dadurch gekennzeichnet, daß die Federeinrichtung (20) eine Mehrzahl von kegelstumpfförmigen Federteilen (94) umfaßt, die um den Verbindungsteil (66) herum positioniert sind und von einer Bodenward (40) dss Basisteils (22) aus nach aufwärts gegen das Einbauteil (18) drücken.

6. Aufbau nach einem der vorhergehenden Anspüche, dadurch gekennzeichnet, daß der Verbindungsteil (66) einen unteren Endteil in Verriegelungseingriff mit dem unteren Teil des Basisteils (22) hat, daß die Federeinrichtung (20) um den Berbindungsteil (66) herum so positioniert ist, daß sie von dem unteren Teil (40) des Basisteils (22) aus nach aufwärts gegen das Einbauteil (18) drückt, daß das Einbauteil (18) eine nach abwärts gerichtete ringförmige Oberfläche (100) hat, die auswärts von dem Verbindungsteil (66) positioniert ist, und daß das Basisteil eine entsprechenden nach aufwärts gerichtete, generell ringförmige oberfläche (98) zum Inkontaktkommen mit der nach abwärts gerichteten Oberfläche (100) des ringförmigen Teils des Einbauteils (18) hat, wobei diese beiden generell ringförmigen Oberflächen die zusammenwirkenden Anschlagmittel zum Beschränken der Abwärtsbewegung des Einbauteils (18) bilden.

**Revendications**

1. Ensemble de support à bille (10) destiné à être utilisé comme élément d'un système de manutention de fret, l'ensemble comprenant:

a. un organe de base (22) ayant une partie inférieure et une partie de paroi périphérique latérale (36, 38) délimitant une chambre (65a, 65b),

b. un organe de montage (18) monté afin qu'il soit mobile dans la chambre et puisse se déplacer en direction verticale sur une distance limitée, l'organe de montage (18) ayant une partie supérieure (64) de retenue de bille délimitant une cavité (68) de retenue de bille et un dispositif (66) limitant la remontée de l'organe de montage (18) par rapport à l'organe de base (22) afin que l'organe de montage (18) soit retenu dans la chambre,

c. une bille (12) montée afin qu'elle puisse tourner dans la cavité (68) et disposée afin qu'elle forme une surface rotative de support,

d. une partie de retenue de bille proche de son bord supérieur ayant une lèvre (76) tournée vers l'intérieur et délimitant une ouverture de diamètre inférieur à celui de la bille (12), afin que la bille (12) soit retenue dans la cavité (68) de retenue de bille,

e. l'organe de montage (18) et l'organe de base (22) ayant des dispositifs coopérants d'arrêt destinés à limiter la descente de l'organe de montage (18) par rapport à l'organe de base (22), et

f. un ressort (20) coopérant avec l'organe de base (22) et l'organe de montage (18) afin qu'il retienne élastiquement l'organe de montage (18) en position superieure dans la chambre (65) et qu'il résiste élastiquement à la descente de l'organe de montage sous l'action des forces appliquées à la surface de support de la bille, caractérisé en ce que la partie de retenue de bille (64) a une paroi latérale (67) qui peut s'écarter radialement si bien que, en position écartée, l'ouverture délimitée par la lèvre (76) tournée vers l'intérieur a une dimension suffisante pour que la bille (12) puisse pénétrer dans la cavité (68) alors que, dans une position reculée, la bille (12) est retenue dans la cavité (68) par la lèvre (76), la paroi périphérique (36) de l'organe de base (22) entourant la paroi latérale (67) de la partie (64) de retenue de bille à l'état monté de l'ensemble de support de bille (10), si bien que la paroi (67) est maintenue dans la position reculée, et

en ce que le dispositif de retenue de l'organe de montage dans la chambre comprend une partie inférieure de raccordement (66) dépassant au-dessus de la partie (64) de retenue de bille et raccordée pendant le fonctionnement à la partie inférieure de l'organe de base (22);

2. Ensemble selon la revendication 1, caractérisé en ce que la paroi latérale (67) qui peut s'écarter a des fentes disposées verticalement (70).

3. Ensemble selon l'une des revendicaions 1 et 2, caractérisé en ce que la partie de raccordement (66) est disposée afin qu'elle s'ajuste dans une ouverture inférieure (92) formée dans la partie inférieur (40) de l'organe de base (22) afin qu'elle soit bloquée par rapport à l'organe de base (22).

4. Ensemble selon la revendication 3, caractérisé en ce que la partie de raccordement (66) comporte plusieurs branches (88) dirigées vers le bas et ayant un dispositif inférieur de blocage (90), l'ensemble (10) comprenant en outre un organe de blocage (24) destiné à maintenir les branches (88) vers l'extérieur en coopération dans l'ouverture inférieure (92) de la partie inférieure (40) de l'organe de base (22).

5. Ensemble selon l'une quelconque des revendications précédentes, caractérisé en ce que le ressort (20) comprend plusieurs organes élastiques tronconiques (94) placées autour de la partie de raccordement (66) et assurant une force de poussée de la paroi intérieure (40) de l'organe de base (22) vers le haut contre l'organe de montage (18).

6. Ensemble selon l'une quelconque des revendications précédentes, caractérisé en ce que la partie de raccordement (66) a une partie d'extrémité inférieure qui est bloquée contre la partie inférieure de l'organe de base (22), le ressort (20) est placée autour de la partie de raccordement (66) afin qu'il assure une force de pression de la partie inférieure (40) de l'organe de base (22) vers le haut contre l'organe de momtage (18), l'organe de montage (18) ayant une surface annulaire (100) tournée vers le bas placée à l'extérieur de la partie de raccordement (66), et l'organe de base ayant une surface annulaire de façon générale (98) tournées vers le haut et de forme complémentaire afin qu'elle vienne au contact de la surface tournée vers le bas (100) de la partie annulaire de l'organe de montage (18), les deux surfaces de forme générale annulaire formant les dispositifs coopérants d'arrêt destinés à limiter la descente de l'organe de montage (18).

FIG. 1

FIG. 2

FIG. 3